(19) Europäisches Patentamt
European Patent Office
Office européen des brevets

(11) **EP 1 695 992 B1**

(12) **EUROPEAN PATENT SPECIFICATION**

(45) Date of publication and mention
of the grant of the patent:
**27.01.2010 Bulletin 2010/04**

(51) Int Cl.:
*C08J 3/24* (2006.01)    *C08L 23/26* (2006.01)
*C08L 23/00* (2006.01)

(21) Application number: **05004358.7**

(22) Date of filing: **28.02.2005**

(54) **Process for preparing crosslinked polymers**

Verfahren zur Herstellung vernetzter Polymere

Procédé de préparation de polymères réticulés

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**30.08.2006 Bulletin 2006/35**

(73) Proprietor: **Borealis Technology Oy**
**06101 Porvoo (FI)**

(72) Inventors:
• **Smedberg, Annika**
**471 61 Myggenäs (SE)**
• **Hampton, Nigel**
**GA 302 97 (US)**

(74) Representative: **Kador & Partner**
**Corneliusstrasse 15**
**80469 München (DE)**

(56) References cited:
**EP-A- 0 453 204    EP-A- 1 041 583**
**WO-A-93/08222    WO-A-97/45465**

Remarks:
The file contains technical information submitted after the application was filed and not included in this specification

EP 1 695 992 B1

**Description**

The present invention relates to a process for preparing crosslinked polymer compositions and layered articles, in particular power cables, comprising the crosslinked polymer.

Many polymers, including polyolefins such as polyethylene, can be crosslinked using specific crosslinking techniques. The process essentially forms chemical bonds between the polymer chains, thereby resulting in a dense polymer network of high molecular weight. The resultant polymer becomes less mobile when subjected to heat or mechanical stress, thereby improving properties like heat distortion, creep and abrasion resistance or environmental stress crack resistance. Crosslinking allows the polymer to be used at higher service temperatures than comparable non-crosslinked polymers.

Crosslinking is a modification process well known in polymer science and can be effected e.g. by specific crosslinking agents such as peroxides or by irradiation. The crosslinking of polyolefins like polyethylene is relevant for many applications, such as extrusion (e.g. of tubes, cable insulating material or cable sheathing), blow moulding, or rotational moulding. In particular in cable technology, crosslinking is of special interest since deformation resistance of the cable at elevated temperature can be improved.

In WO 93/08222, use of a polyethylene composition for producing crosslinked structures is disclosed.

In the preparation process of power cables, crosslinkable polyolefins are applied as coating layers on power cables by extrusion. In such an extrusion process, the metallic conductor is generally coated first with a semiconductive layer, followed by an insulating layer and another semiconductive layer. These layers are normally crosslinked and are normally made of crosslinked ethylene homopolymers and/or ethylene copolymers.

Crosslinking of polyolefins can be effected by adding free radical forming agents like peroxides to the polymer. If the polymer shall be subjected to extrusion, the blending step can be carried out either in the extruder or prior to extruding. However, in both cases, it is necessary to have a homogeneous mixture of polymer and crosslinking agent. Any inhomogeneous distribution of crosslinking agents like peroxides within the polymer will adversely affect the crosslinking process and, consequently, the final crosslinked material.

Furthermore, it is desired to achieve homogeneity by mixing within a short period of time since reduced blending time will increase output rate of the extrusion process. However, if blending is e.g. effected in an extruder by directly feeding the peroxide to the extruder without providing sufficient mixing time, a significant amount of peroxide will not diffuse into the polymer but will lubricate the polymeric melt. As a consequence thereof, shear within the extruder is reduced which adversely affects homogeneity of the melt. The same problem arises if the amount of peroxide added to the polymer is too high.

Sufficient homogeneity could be reached more easily with a reduced amount of peroxide. Furthermore, reduced amount of peroxide would increase extrusion output rate since the same degree of homogeneity is achieved within less time. However, on the other hand, it has to be ensured that the polymeric melt can still be sufficiently crosslinked to result in appropriate thermal and mechanical properties.

Considering the problems mentioned above, it is an object of the present invention to provide a process wherein a polymer composition can be crosslinked with a reduced amount of crosslinking agent and blending is improved but still results in high crosslinking efficiency. Furthermore, the process shall prepare crosslinked polymers at high production rate.

These objects are solved by the process of the present invention for preparing a crosslinked polymer composition, comprising the steps of:

(a) preparing a crosslinkable blend of a crosslinking agent and an unsaturated polyolefin having a total amount of carbon-carbon double bonds/1000 carbon atoms of more than 0.37, wherein the blending step is carried out prior to and/or during extrusion of the unsaturated polyolefin, and the crosslinking agent is in a liquid state when it comes into contact with the unsaturated polyolefin,
(b) extruding the blend in an extruder,
(c) applying the extruded blend onto a substrate, and
(d) treating the extruded blend under crosslinking conditions.

In the context of the present invention, the term "total amount of carbon-carbon double bonds" refers to those double bonds originating from vinyl groups, vinylidene groups and *trans-vinylene* groups. The amount of each type of double bond is measured as indicated in the experimental part.

The incorporation of the total amount of carbon-carbon double bonds according to the present invention within the polyolefin component enables to accomplish improved crosslinking properties.

In a preferred embodiment, the total amount of carbon-carbon double bonds is at least 0.40/1000 C-atoms. In other preferred embodiments, the total amount of carbon-carbon double bonds is at least 0.45, at least 0.50, at least 0.55, at least 0.60, at least 0.65, at least 0.70, at least 0.75 or at least 0.80/1000 C-atoms.

The total amount of vinyl groups is preferably more than 0.11/1000 carbon atoms. In other preferred embodiments, it is at least 0.15, at least 0.20, at least 0.25, at least 0.30, at least 0.35, at least 0.40, at least 0.45, at least 0.50, at least 0.55, at least 0.60, at least 0.65, at least 0.70, at least 0.75, or at least 0.80 vinyl groups/1000 carbon atoms. Of course, since a vinyl group is a specific type of carbon-carbon double bond, the total amount of vinyl groups for a given unsaturated polyolefin does not exceed its total amount of double bonds.

Two types of vinyl groups can be differentiated. One type of vinyl group is generated by the polymerisation process (e.g. via a β-scission reaction of a secondary radical) or results from the use of chain transfer agents introducing vinyl groups. Another type of vinyl group may originate from a polyunsaturated comonomer used for the preparation of the unsaturated polyolefin, as will be described later in greater detail.

Preferably, the amount of vinyl groups originating from the polyunsaturated comonomer is at least 0.03/1000 carbon atoms. In other preferred embodiments, the amount of vinyl groups originating from the polyunsaturated comonomer is at least 0.06, at least 0.09, at least 0.12, at least 0.15, at least 0.18, at least 0.21, at least 0.25, at least 0.30, at least 0.35 or at least 0.40/1000 carbon atoms.

In addition to the vinyl groups originating from the polyunsaturated comonomer, the total amount of vinyl groups may further comprise vinyl groups originating from a chain transfer agent which introduces vinyl groups, such as propylene.

Preferred unsaturated polyolefins of the present invention may have densities higher than 0.860, 0.880, 0.900, 0.910, 0.915, 0.917, or 0.920 g/cm$^3$.

The polyolefin can be unimodal or multimodal, e.g. bimodal.

Preferably, the unsaturated polyolefin has a melt flow rate $MFR_{2.16/190°C}$ of 0.1 to 30 g/10 min, more preferably 0.3 to 20 g/10 min, even more preferably 0.5 to 10 g/10 min, and most preferably 0.5 to 6 g/10 min. When the melt flow rate is adjusted to a value within these ranges, blending of the unsaturated polyolefin and the crosslinking agent is improved. Furthermore, subsequent extrusion is improved, and, in combination with enhanced crosslinking performance, results in higher productivity throughout the process of the present invention.

In the present invention, the unsaturated polyolefin is preferably an unsaturated polyethylene or an unsaturated polypropylene. Most preferably, the unsaturated polyolefin is an unsaturated polyethylene. Unsaturated polyethylene of low density is preferred. In a preferred embodiment, the unsaturated polyethylene contains at least 60 wt-% ethylene monomer units. In other preferred embodiments, the unsaturated polyethylene contains at least 70 wt-%, at least 80 wt-% or at least 90 wt-% ethylene monomer units.

Preferably, the unsaturated polyolefin is prepared by copolymerising at least one olefin monomer with at least one polyunsaturated comonomer. In a preferred embodiment, the polyunsaturated comonomer consists of a straight carbon chain with at least 8 carbon atoms and at least 4 carbon atoms between the non-conjugated double bonds, of which at least one is terminal.

Ethylene and propylene are preferred olefin monomers. Most preferably, ethylene is used as the olefin monomer. As a comonomer, a diene compound is preferred, e.g. 1,7-octadiene, 1,9-decadiene, 1,11-dodecadiene, 1,13-tetradecadiene, or mixtures thereof. Furthermore, dienes like 7-methyl-1,6-octadiene, 9-methyl-1,8-decadiene, or mixtures thereof can be mentioned.

Siloxanes having the following formula:
$CH_2$=CH-[Si($CH_3$)$_2$-O]$_n$-Si($CH_3$)$_2$-CH=$CH_2$, wherein n=1 or higher can also be used as a polyunsaturated comonomer. As an example, divinylsiloxanes, e.g. α,ω-divinylsiloxane, can be mentioned.

In addition to the polyunsaturated comonomer, further comonomers can optionally be used. Such optional comonomers are selected from $C_3$-$C_{20}$ alpha-olefins such as propylene, 1-butene, 1-hexene and 1-nonene, polar comonomers such as acrylates, methacrylates or acetates.

As an example, the crosslinkable blend may contain small amounts of one or more polar comonomer units, such as 1-100 micromole, 2-80 micromole and 5-60 micromole polar comonomer units per gram of unsaturated polyolefin.

The unsaturated polyolefin can be produced by any conventional polymerisation process. Preferably, it is produced by radical polymerisation, such as high pressure radical polymerisation. High pressure polymerisation can be effected in a tubular reactor or an autoclave reactor. Preferably, it is a tubular reactor. Further details about high pressure radical polymerisation are given in WO93/08222. However, the unsaturated polyolefin can also be prepared by other types of polymerisation processes such as coordination polymerisation, e.g. in a low pressure process using any type of supported and non-supported polymerisation catalyst. As an example, multi-site including dual site and single site catalyst systems such as Ziegler-Natta, chromium, metallocenes of transition metal compounds, non-metallocenes of late transition metals, said transition and later transition metal compounds belonging to group 3-10 of the periodic table (IUPAC 1989). The coordination polymerization processes and the mentioned catalysts are well-known in the field and may be commercially available or produced according to known literature.

According to the present invention, the unsaturated polyolefin is blended with a crosslinking agent.

In the context of the present invention, a crosslinking agent is defined to be any compound capable to generate radicals which can initiate radical initiated polymerisation. Preferably, the crosslinking agent contains at least one -O-O- bond or at least one -N=N- bond. More preferably, the cross-linking agent is a peroxide.

The cross-linking agent, e.g. a peroxide, is preferably added in an amount of 0.1-3.0 wt.-%, more preferably 0.15-2.6 wt.-%, most preferably 0.2-2.2 wt.-%, based on the weight of the crosslinkable blend.

As peroxides used for crosslinking, the following compounds can be mentioned: di-tert-amylperoxide, 2,5-di (tert-butylperoxy)-2,5-dimethyl-3-hexyne, 2,5-di(tert-butylperoxy)-2,5-dimethylhexane, tert-butylcumylperoxide, di(tert-butyl)peroxide, dicumylperoxide, di(tert-butylperoxyisopropyl)benzene, butyl-4,4-bis(tert-butylperoxy)valerate, 1,1-bis (tert-butylperoxy)-3,3,5-trimethylcyclohexane, tert-butylperoxybenzoate, dibenzoylperoxide.

Preferably, the peroxide is selected from 2,5-di(tert-butylperoxy)-2,5-dimethyl-hexane, di(tert-butylperoxy-isopropyl)benzene, dicumylperoxide, tert-butylcumylperoxide, di(tert-butyl)peroxide, or mixtures thereof. Most preferably, the peroxide is dicumylperoxide.

According to the present invention, the crosslinkable blend of the unsaturated polyolefin and the crosslinking agent is prepared prior to and/or during extrusion of the polyolefin. Furthermore, the crosslinking agent is in a liquid state when it comes into contact with the unsaturated polyolefin. In the context of the present invention, the crosslinking agent is in a liquid state when heated to a temperature above its melting point or glass transition point. Furthermore, in the context of the present invention, the crosslinking agent is in a liquid state when dissolved in at least one liquid additive or mixed with at least one additive and the resultant mixture is in a liquid state. If necessary, the mixture is brought into a liquid state by heat treatment.

In a preferred embodiment, the crosslinking agent is blended with the unsaturated polyolefin prior to extrusion. The blending step can be effected in a blending vessel from which the blend is fed to the extruder.

To improve blending rate and homogeneity of the blend, the unsaturated polyolefin is preferably preheated. It is preferred that the polyolefin does not melt upon preheating. Preferably, the polyolefin is preheated to a temperature of 70°C, more preferably 80°C. Furthermore, it is preferred to provide the unsaturated polyolefin in the form of pellets or powder.

If a crosslinking agent is used which is solid at room temperature, it is heated above its melting point, and the melt is added to the unsaturated polyolefin.

Preferably, homogeneity of the blend is further improved by mechanical mixing. Any conventional mixer can be used.

In another preferred embodiment, the blending step is carried out during extrusion of the unsaturated polyolefin. In this preferred embodiment, a melt of the polyolefin is already provided in the extruder and the crosslinking agent is directly fed into the extruder, e.g. via the hopper or by injection. If a crosslinking agent is used which is solid at room temperature, it is preferably heated above its melting point before being fed into the extruder.

In blending step (a) of the present invention, further additives can optionally be added which are preferably in a liquid state when they come into contact with the unsaturated polyolefin. As possible additives, antioxidants, scorch retarders, crosslinking boosters, stabilisers, processing aids, flame retarder additives, acid scavengers, inorganic fillers, voltage stabilizers, or mixtures thereof can be mentioned.

In the context of the present invention, an additive is in a liquid state when heated above its melting point or glass transition point. Furthermore, an additive is in a liquid state when dissolved in a liquid additive and/or crosslinking agent or mixed with at least one additive and/or crosslinking agent and the resultant mixture is in a liquid state. If necessary, the mixture is heated until a liquid state is reached.

A "scorch retarder" is defined to be a compound that reduces the formation of scorch during extrusion of a polymer composition if compared to the same polymer composition extruded without said compound. Besides scorch retarding properties, the scorch retarder may simultaneously result in further effects like boosting, i.e. enhancing crosslinking performance.

Useful scorch retarders can be selected from 2,4-diphenyl-4-methyl-1-pentene, substituted or unsubstituted diphenylethylene, quinone derivatives, hydroquinone derivatives, monofunctional vinyl containing esters and ethers, or mixtures thereof. More preferably, the scorch retarder is selected from 2,4-diphenyl-4-methyl-1-pentene, substituted or unsubstituted diphenylethylene, or mixtures thereof. Most preferably, the scorch retarder is 2,4-diphenyl-4-methyl-1-pentene.

Preferably, the amount of scorch retarder is within the range of 0.005 to 1.0 wt.-%, more preferably within the range of 0.01 to 0.8 wt.-%, based on the weight of the crosslinkable blend. Further preferred ranges are 0.03 to 0.75 wt.-%, 0.05 to 0.70 wt.-% and 0.07 to 0.50 wt.-%, based on the weight of the crosslinkable blend.

Typical cross-linking boosters may include compounds having an allyl group, e.g. triallylcyanurate, triallylisocyanurate, and di-, tri- or tetraacrylates.

As antioxidant, sterically hindered or semi-hindered phenols, aromatic amines, aliphatic sterically hindered amines, organic phosphates, thio compounds, and mixtures thereof, can be mentioned.

If an antioxidant, optionally a mixture of two or more antioxidants, is used, the added amount can range from 0.005 to 2.5 wt.-%, based on the weight of the unsaturated polyolefin. If the unsaturated polyolefin is an unsaturated polyethylene, the antioxidant(s) are preferably added in an amount of 0.005 to 0.80 wt.-%, more preferably 0.01 to 0.60 wt-%, even more preferably 0.05 to 0.50 wt-%, based on the weight of the unsaturated polyethylene. If the unsaturated polyolefin is an unsaturated polypropylene, the antioxidant(s) are preferably added in an amount of 0.005 to 2 wt-%, more preferably 0.01 to 1.5 wt-%, even more preferably 0.05 to 1 wt-%, based on the weight of the unsaturated polypropylene.

Further additives may be present in an amount of 0.005 to 3 wt%, more preferably 0.005 to 2 wt%. Flame retarder additives and inorganic fillers can be added in higher amounts.

The additives can be added prior to and/or during extrusion. Furthermore, they can be added simultaneously or in varying sequences. As an example, the unsaturated polyolefin can be blended with at least one additive, e.g. one or more antioxidants, before blending with the crosslinking agent is effected. Alternatively, the crosslinking agent and at least one additive are blended simultaneously with the unsaturated polyolefin. As explained above, when the crosslinking agent is blended with one or more additives, the resultant mixture has to be in a liquid state. If necessary, the mixture is heated to be in a liquid state. Subsequently, the liquid mixture is blended with the unsaturated polyolefin. Further details about preferred blending steps are given below.

According to a preferred embodiment, the unsaturated polyolefin is mixed with one or more antioxidants, possibly in combination with further additives, either on solid pellets or powder or by melt mixing, followed by forming pellets from the melt. Subsequently, the crosslinking agent, preferably a peroxide, is added to the pellets or powder in a second step, optionally in combination with a scorch retarder. As already explained above, if the crosslinking agent is added in combination with at least one additive, these are preferably dissolved in each other resulting in a liquid mixture. Alternatively, if a scorch retarder is added, it could already be added in the first step, together with the antioxidant(s). The final pellets are fed to the extruder.

According to another preferred embodiment, instead of a two-step process, the unsaturated polyolefin, preferably in the form of pellets or powder, the crosslinking agent, optionally in combination with a scorch retarder, one or more antioxidant(s) and/or further additives, are added to a compounding extruder, single or twin screw. Preferably, the compounding extruder is operated under careful temperature control.

According to another preferred embodiment, the crosslinking agent, optionally in combination with a scorch retarder, antioxidant(s) and/or further additives, are added onto the pellets or powder made of the unsaturated polyolefin.

According to another preferred embodiment, pellets made of the unsaturated polyolefin, optionally further containing antioxidant(s) and additional additives, are prepared in a first step, e.g. by melt mixing. These pellets are then fed into the cable extruder. Subsequently, crosslinking agent, optionally in combination with a scorch retarder, are either fed to the hopper or directly fed into the cable extruder.

According to another preferred embodiment, pellets made of the unsaturated polyolefin without any additional components are fed to the extruder. Subsequently, crosslinking agent, optionally in combination with antioxidant(s), scorch retarder and/or further additives, are either fed to the hopper or directly fed into the polymeric melt within the cable extruder.

According to another preferred embodiment, a highly concentrated master batch is prepared. The master batch may also comprise one or more antioxidants, scorch retarder and crosslinking agent. This master batch is then added to/mixed with the unsaturated polyolefin. Alternatively, only two of these components are present in the starting master batch whereas the third component (i.e. either antioxidant(s), crosslinking agent, or scorch retarder) is added separately in a liquid form.

Since homogeneity of the crosslinkable blend can improve properties of the resultant crosslinked material, it is preferred to continue blending of the unsaturated polyolefin and the crosslinking agent until a homogeneous mixture is obtained. Within the context of the present invention, "homogeneous mixture" means that the unsaturated polyolefin and the crosslinking agent do not form separated phases but all the crosslinking agent is present within the polymeric material.

Since the unsaturated polyolefin enables to reduce the amount of crosslinking agent and blending is facilitated by addition of liquid crosslinking agent, optionally in combination with further liquid additives, the blending time can be reduced significantly without adversely affecting crosslinking efficiency and crosslinking degree.

According to the present invention, the crosslinkable blend obtained in blending step (a) is extruded in an extruder. For the extrusion step, any conventional extruder can be selected, e.g. single screw extruder and twin screw extruder. Preferably, a temperature profile within the extruder is chosen so as to optimise extrusion rate but suppress scorch as much as possible and still achieving enough homogenization.

According to the present invention, the extruded blend is applied onto a substrate.

Preferably, the blend is extruded onto the metallic conductor of a power cable and/or at least one coating layer thereof, e.g. a semiconductive layer or insulating layer. In the context of the present invention, a power cable is defined to be a cable that transfers energy operating at any voltage. The voltage applied to the power cable can be alternating (AC), direct (DC), or transient (impulse). In a preferred embodiment, the multilayered article is a power cable operating at voltages higher than 1 kV. In other preferred embodiments, the power cable prepared according to the present invention is operating at voltages higher than 6 kV, higher than 10 kV, higher than 33 kV, or higher than 66 kV.

According to the present invention, the extruded blend is treated under crosslinking conditions, also known as vulcanisation.

Crosslinking can be effected by treatment at increased temperature, e.g. at a temperature of at least 160°C. When peroxides are used, crosslinking is generally initiated by increasing the temperature to the decomposition temperature of the corresponding peroxide.

Due to the presence of a total amount of carbon-carbon double bonds/1000 C-atoms of more than 0.37 within the unsaturated polyolefin, a lower crosslinking temperature can be used, thereby still reaching sufficiently high crosslinking levels. Lower crosslinking temperature is beneficial in cases where temperature sensitive materials are used.

For the same reason, the amount of crosslinking agent, which is necessary to achieve the same degree of crosslinking, can be reduced. Furthermore, homogeneity of the blend of polyolefin/crosslinking agent has been improved which is why decomposition products are also distributed more homogeneously throughout the crosslinked polymer matrix. As a consequence, the amount of by-products generated during crosslinking can be reduced and the by-products can be removed under milder degassing conditions.

Preferably, crosslinking conditions are maintained until the crosslinked composition has a hot set elongation value of 175 % or less at 200°C, measured according to IEC 60811-2-1. This method is also called "hot set" and indicates the degree of crosslinking. Lower hot set value means less thermal deformation and, consequently, higher degree of crosslinking. More preferably, the hot set elongation value is 120 % or less, even more preferably 100 % or less, and most preferably 90 % or less.

Furthermore, crosslinking conditions are preferably maintained until the crosslinked composition of the present invention has a permanent deformation of less than 15 %, even more preferably of less than 10 %. Permanent deformation is measured as described in the experimental part under "(c) Hot set measurements".

The invention will now be described in further detail by the following examples.

**Examples**

Testing methods/measuring methods

(a) Determination of the content of double bonds:

The procedure for the determination of the amount of double bonds/1000 C-atoms is based upon the ASTM D3124-72 method. In that method, a detailed description for the determination of vinylidene groups/1000 C-atoms is given based on 2,3-dimethyl-1,3-butadiene. This sample preparation procedure has also been applied for the determination of vinyl groups/1000 C-atoms, vinylidene groups/1000 C-atoms and *trans*-vinylene groups/1000 C-atoms in the present invention. However, for the determination of the extinction coefficient for these three types of double bonds, the following three compounds have been used: 1-decene for vinyl, 2-methyl-1-heptene for vinylidene and *trans-4-decene* for trans-vinylene, and the procedure as described in ASTM-D3124 section 9 was followed.

The total amount of doublebonds was analysed by means of IR spectrometry and given as the amount of vinyl bonds, vinylidene bonds and trans-vinylene bonds, respectively.

Thin films were pressed with a thickness of 0.5-1.0 mm. The actual thickness was measured. FT-IR analysis was performed on a Perkin Elmer 2000. Four scans were recorded with a resolution of 4 cm$^{-1}$.

A base line was drawn from 980 cm$^{-1}$ to around 840 cm$^{-1}$. The peak heights were determined at around 888 cm$^{-1}$ for vinylidene, around 910 cm$^{-1}$ for vinyl and around 965 cm$^{-1}$ for *trans*-vinylene. The amount of double bonds/1000 carbon atoms was calculated using the following formulas (ASTM D3124-72):

$$\text{vinylidene/1000 C-atoms} = (14 \times A)/(18.24 \times L \times D)$$

$$\text{vinyl/1000 C-atoms} = (14 \times A)/(13.13 \times L \times D)$$

$$\textit{trans}\text{-vinylene/1000 C-atoms} = (14 \times A)/(15.14 \times L \times D)$$

wherein

A: absorbance (peak height)
L: film thickness in mm

D: density of the material

(b) Melt flow rate $MFR_{2.16/190°C}$

The melt flow rate (MFR) is determined according to ISO 1133 and is indicated in g/10 min. The MFR is an indication of the flowability, and hence the processability, of the polymer. The higher the melt flow rate, the lower the viscosity of the polymer. $MFR_{2.16/190°C}$ is determined at 190°C and at a loading of 2.16 kg ($MFR_2$).

(c) Hot set measurements

The hot set elongation as well as the permanent deformation was determined on dumbbell shaped specimens that were punched out from crosslinked plaques. The crosslinked plaques were prepared according to the following procedure: First, the pellets were melted at 115°C at around 20 bar for 2 minutes. The pressure was increased to 200 bar, followed by ramping the temperature up to 165°C. The material was kept at 165°C for 25 minutes and after that, it was cooled down to room temperature at a cooling rate of 15°C/min. The thickness of the plaque was around 1.8 mm. The properties were determined according to IEC 60811-2-1. In the hot set test, a dumbbell of the tested material is equipped with a weight corresponding to 20 $N/cm^2$. This specimen is put into an oven at 200°C and after 15 minutes, the elongation is measured. Subsequently, the weight is removed and the sample is allowed to relax for 5 minutes. Then, the sample is taken out from the oven and is cooled down to room temperature. The permanent deformation is determined.

(d) Elastograph measurements of the degree of crosslinking

The degree of crosslinking was determined on a Göttfert Elastograph. First, a circular plaque was pressed at 120°C, 2 min. without pressure, followed by 2 min. at 5 tons. Then, the circular plaque was cooled to room temperature. In the Elastograph, the evolution of the torque is measured as a function of crosslinking time at 180°C. The test was used to monitor that the degree of crosslinking was comparable in the different samples.
The reported torque values are those reached after 10 minutes of crosslinking at 180°C.

Materials

Polymer 1:
A poly(ethylene-co-1,7-octadiene), $MFR_{2.16/190°C}$ = 2.7 g/10 min

Polymer 2:
A poly(ethylene-co-1,7-octadiene) polymer, $MFR_{2.16/190°C}$ = 2.1 g/10 min

Polymer 3:
A poly(ethylene-co-1,7-octadiene) polymer, $MFR_{2.16/190°C}$ = 2.0 g/10 min

Polymer 4 (reference polymer):
A low-density polyethylene (LDPE), $MFR_{2.16/190°C}$ = 2.0 g/10 min

The amount of double bonds for each polymer is summarised in table 1.

Table 1: Double bond content

| sample | vinyl/ 1000 C | vinylidene/ 1000 C | *trans*-vinylene/ 1000 C | total double bond content /1000 C | vinyls originating from diene /1000 C |
|---|---|---|---|---|---|
| polymer 1 | 0.82 | 0.24 | 0.11 | 1.17 | 0.71 |
| polymer 2 | 0.26 | 0.21 | 0.06 | 0.53 | 0.15 |
| polymer 3 | 0.25 | 0.26 | 0.06 | 0.57 | 0.14 |
| polymer 4 (reference) | 0.11 | 0.22 | 0.04 | 0.37 | - |

**EP 1 695 992 B1**

The amount of vinyl groups originating from the polyunsaturated comonomer (i.e. in this example 1,7-octadiene) per 1000 carbon atoms was determined as follows:

Inventive polymers 1-3 and reference polymer 4 have been produced on the same reactor, basically using the same conditions, i.e. similar temperature, pressure and production rate. The total amount of vinyl groups of each polymer was determined by FT-IR measurements, as described above. Then, it is assumed that the base level of vinyl groups, i.e. the ones formed by the process without the addition of chain transfer agent resulting in vinyl groups and without the presence of a polyunsaturated comonomer, is the same for the reference and for polymers 1-3. This base level is then subtracted from the measured amount of vinyl groups in polymers 1-3, thereby resulting in the amount of vinyl groups/ 1000 C-atoms, which result from the polyunsaturated comonomer.

All polymers were polymerised in a high pressure tubular reactor at a pressure of 1000 to 3000 bar and a temperature of 100 to 300°C. All polymers have a density within the range of 0.920-0.925 g/cm$^3$

Example 1

The following composition 1 and comparative composition 1 were prepared.

| | |
|---|---|
| Composition 1: | Polymer 1 + 0.19 wt.-% antioxidant + 1.21 wt.-% dicumylperoxide |
| Comparative composition 1: | Polymer 4 + 0.19 wt.-% antioxidant + 2.2 wt.-% dicumylperoxide |
| antioxidant: | 4,4'-thiobis(2-tertbutyl-5-methylphenol) |

In both compositions, the amount of dicumylperoxide was chosen so as to result in the same torque value of about 0.6 Nm.

The example clearly shows that the increased amount of double bonds significantly reduces the amount of peroxide needed to achieve the same degree of crosslinking.

The same degree of crosslinking is further demonstrated by very similar hot set elongation values:

| | |
|---|---|
| Hot set value comp. 1: | 45.6 %, permanent deformation: 1.6 % |
| Hot set value comparative comp. 1: | 48.4 %, permanent deformation: 1.6 % |

Example 2

The following composition 2 and comparative composition 2 were prepared.

| | |
|---|---|
| Composition 2: | Polymer 2 + 0.19 wt.-% antioxidant + 1.8 wt.-% dicumylperoxide |
| Comparative composition 2: | Polymer 4 + 0.19 wt.-% antioxidant + 2.1 wt.-% dicumylperoxide |
| antioxidant: | 4,4'-thiobis(2-tertbutyl-5-methylphenol) |

In both compositions, the amount of dicumylperoxide was chosen so as to result in the same torque value of 0.62 Nm.

Again, by increasing the amount of double bonds, the amount of peroxide needed to achieve the same degree of crosslinking is clearly reduced.

Example 3

A composition 3 was prepared from polymer 3 to which an ethylene/butylacrylate copolymer, containing 17 wt.-% butylacrylate, was added so as to obtain 24 micromoles of butylacrylate comonomer units in the total composition. Composition 3 further contained 0.16 wt.-% antioxidant (4,4'-thiobis(2-tertbutyl-5-methylphenol)) and 1.7 wt.-% dicumylperoxide.

Comparative composition 3 was made from polymer 4 to which an ethylene/butylacrylate copolymer, containing 17 wt.-% butylacrylate, was added so as to obtain 24 micromoles of butylacrylate comonomer units in the total composition. Comparative composition 3 further contained 0.16 wt.-% antioxidant (4,4'-thiobis(2-tertbutyl-5-methylphenol)) and 2.1 wt.-% dicumylperoxide.

In both compositions, the amount of dicumylperoxide was chosen so as to result in the same torque value of 0.62 Nm.

Again, by increasing the amount of double bonds, the amount of peroxide needed to achieve the same degree of crosslinking is clearly reduced.

Example 4: Absorption experiments

(a) Pellets were pre-heated to greater than 70°C. Dicumylperoxide was molten in a separate vessel. The molten peroxide was poured over the preheated pellets and the mixture was then tumbled until the pellets were dry. The period of time from adding the molten peroxide to the pellets until the pellets became dry is defined to be the blending time. Composition 1 needed 20 minutes to become dry whereas comparative composition 1 needed 25 minutes to become dry. This clearly shows that composition 1 containing less peroxide had a much shorter blending time, thereby enabling to have an increased production rate for cable manufacturing.

(b) The following compositions were provided:

| | |
|---|---|
| Composition 4: | Polymer 1 + 0.17 wt.-% antioxidant + 1.10 wt.-% tert.-butylcumylperoxide |
| Reference composition 4: | Polymer 4 + 0.19 wt.-% antioxidant + 1.80 wt.-% tert.-butylcumylperoxide |
| antioxidant: | 4,4'-thiobis(2-tertbutyl-5-methylphenol) |

In both compositions, the amount of tert-butylcumylperoxide was chosen so as to result in the same torque value of around 0.63 Nm.

Absorption experiments were made as indicated above. For composition 4, the blending time was 9 minutes, whereas for comparative composition 4, the blending time was 15 minutes.

**Claims**

1. A process for preparing a crosslinked polymer composition, comprising the steps:

(a) preparing a crosslinkable blend of a crosslinking agent and an unsaturated polyolefin,
having a total amount of carbon-carbon double bonds/1000 carbon atoms of more than 0.37, based upon ASTM D3124-72, wherein the base line is drawn from 980 cm$^{-1}$ to around 840 cm$^{-1}$ and the peak heights are determined at around 888 cm$^{-1}$ for vinylidene, around 910 cm$^{-1}$ for vinyl and around 965 cm$^{-1}$ for *trans*-vinylene,
wherein the amount of double bonds/1000 carbon atoms was calculated using the following formulas (ASTM D3124-72):

$$\text{vinylidene}/1000 \text{ C-atoms} = (14 \times A)/(18.24 \times L \times D)$$

$$\text{vinyl}/1000 \text{ C-atoms} = (14 \times A)/(13.13 \times L \times D)$$

$$\textit{trans}\text{-vinylene}/1000 \text{ C-atoms} = (14 \times A)/(15.14 \times L \times D)$$

wherein

A: absorbance (peak height)
L: film thickness in mm
D: density of the material;

wherein the blending step is carried out prior to and/or during extrusion of the unsaturated polyolefin, and the crosslinking agent is in a liquid state when it comes into contact with the unsaturated polyolefin,
(b) extruding the blend in an extruder,
(c) applying the extruded blend onto a substrate, and
(d) treating the extruded blend under crosslinking conditions.

2. The process according to claim 1, wherein for blending the liquid crosslinking agent comes into contact with the unsaturated polyolefin in a blending vessel, followed by feeding the blend to the extruder.

3. The process according to claim 1 or claim 2, wherein the unsaturated polyolefin is preheated prior to the blending step.

4. The process according to claim 1, wherein the blend is prepared by providing the unsaturated polyolefin in the extruder and directly feeding the crosslinking agent into the extruder.

5. The process according to one of the preceding claims, wherein one or more additives are blended with the unsaturated polyolefin, the additive(s) being in a liquid state when brought into contact with the unsaturated polyolefin.

6. The process according to claim 5, wherein the additives are selected from antioxidants, scorch retarders, crosslinking boosters, stabilisers, processing aids, acid scavengers, or mixtures thereof.

7. The process according to one of the claims 5 and 6, wherein the unsaturated polyolefin is blended with at least one additive before blending with the crosslinking agent is effected.

8. The process according to claim 7, wherein the at least one additive is an antioxidant.

9. The process according to one of the claims 5 and 6, wherein the crosslinking agent and at least one additive are blended simultaneously with the unsaturated polyolefin.

10. The process according to one of the preceding claims, wherein at least some of the carbon-carbon double bonds are vinyl groups.

11. The process according to claim 10, wherein the unsaturated polyolefin has a total amount of vinyl groups/1000 carbon atoms of more than 0.11.

12. The process according to one of the preceding claims, wherein the unsaturated polyolefin is prepared by copolymerizing an olefin monomer and at least one polyunsaturated comonomer.

13. The process according to claim 12, wherein the unsaturated polyolefin has an amount of vinyl groups/1000 carbon atoms originating from the polyunsaturated comonomer of at least 0.03.

14. The process according to claim 12 or 13, wherein at least one polyunsaturated comonomer is a diene.

15. The process according to claim 14, wherein the diene is selected from 1,7-octadiene, 1,9-decadiene, 1,11-dodecadiene 1,13-tetradecadiene, 7-methyl-1,6-octadiene, 9-methyl-1,8-decadiene or mixtures thereof.

16. The process according to claim 14, wherein the diene is selected from siloxanes having the following formula:

$$CH_2=CH-[Si(CH_3)_2-O]_n-Si(CH_3)_2-CH=CH_2, \text{ wherein n=1 or higher.}$$

17. The process according to one of the claims 12-16, wherein the olefin monomer is ethylene.

18. The process according to claim 17, wherein the unsaturated polyethylene is produced by high pressure radical polymerisation.

19. The process according to one of the preceding claims, wherein the crosslinking agent is a peroxide.

20. The process according to claim 19, wherein the peroxide is added in an amount of 0.1-3.0 wt.-%, based on the weight of the crosslinkable blend.

21. The process according to one of the preceding claims, wherein the substrate onto which the crosslinkable blend is extruded is the metallic conductor of a power cable and/or at least one coating layer thereof.

22. The process according to claim 21, wherein the power cable is treated under crosslinking conditions until a hot set elongation value of the crosslinked polymer composition, measured at a temperature of 200°C, of less than 175 % is obtained, according to IEC 60811-2-1.

23. The process according to claim 22, wherein the power cable is treated under crosslinking conditions until a permanent deformation of the crosslinked polymer composition, measured at room temperature, of less than 15 % is obtained, according to IEC 60811-2-1.

**Patentansprüche**

1. Verfahren zum Herstellen einer vernetzten Polymerzusammensetzung, umfassend die Schritte:

(a) Erzeugen eines vernetzbaren Gemischs aus einem Vernetzungsmittel und einem ungesättigten Polyolefin, das eine Gesamtmenge der Kohlenstoff-Kohlenstoff-Doppelbindungen/1000 Kohlenstoffatome von mehr als 0,37 aufweist, und zwar auf ASTM D3124-72 basierend, wobei die Grundlinie von 980 cm$^{-1}$ bis etwa 840 cm$^{-1}$ gezogen wird und die Peakhöhen für Vinyliden bei etwa 888 cm$^{-1}$, für Vinyl bei etwa 910 cm$^{-1}$ und für trans-Vinylen bei etwa 965 cm$^{-1}$ bestimmt werden,
wobei die Menge der Doppelbindungen/1000 Kohlenstoffatome unter Anwendung der folgenden Formeln berechnet wurde (ASTM D3124-72):

$$\mathrm{Vinyliden/1000\ C\text{-}Atome} = (14 \times A)/(18{,}24 \times L \times D)$$

$$\mathrm{Vinyl/1000\ C\text{-}Atome} = (14 \times A)/(13{,}13 \times L \times D)$$

$$\mathrm{trans\text{-}Vinylen/1000\ C\text{-}Atome} = (14 \times A)/(15{,}14 \times L \times D)$$

wobei

A: Absorbtionsmaß (Peakhöhe)
L: Schichtdicke in mm
D: Dichte des Materials;

wobei der Schritt des Vermischens vor und/oder während des Extrudierens des ungesättigten Polyolefins erfolgt und das Vernetzungsmittel in einem flüssigen Zustand vorliegt, wenn es mit dem ungesättigten Polyolefin in Kontakt kommt,
(b) Extrudieren des Gemischs in einem Extruder,
(c) Aufbringen des extrudierten Gemischs auf ein Substrat und
(d) Behandeln des extrudierten Gemischs unter Vernetzungsbedingungen.

2. Verfahren nach Anspruch 1, wobei für das Vermischen das flüssige Vernetzungsmittel in einem Mischgefäß mit dem ungesättigten Polyolefin in Kontakt kommt, gefolgt vom Beschicken des Extruders mit dem Gemisch.

3. Verfahren nach Anspruch 1 oder Anspruch 2, wobei das ungesättigte Polyolefin vor dem Mischschritt vorgewärmt wird.

4. Verfahren nach Anspruch 1, wobei das Gemisch erzeugt wird, indem das ungesättigte Polyolefin im Extruder bereitgestellt wird und das Vernetzungsmittel direkt in den Extruder eingeführt wird.

5. Verfahren nach einem der vorstehenden Ansprüche, wobei ein oder mehrere Zusätze mit dem ungesättigten Polyolefin vermischt werden, wobei der Zusatz (die Zusätze) in einem flüssigen Zustand vorliegt (vorliegen), wenn er (sie) mit dem ungesättigten Polyolefin in Kontakt gebracht wird (werden).

6. Verfahren nach Anspruch 5, wobei die Zusätze aus Antioxidantien, Versengungshemmstoffen, Vernetzungsbeschleunigern, Stabilisatoren, Verarbeitungshilfsmitteln, Säurefängern oder Gemischen davon ausgewählt sind.

7. Verfahren nach einem der Ansprüche 5 und 6, wobei das ungesättigte Polyolefin mit zumindest einem Zusatz vermischt wird, bevor das Vermischen mit dem Vernetzungsmittel erfolgt.

8. Verfahren nach Anspruch 7, wobei der zumindest eine Zusatz ein Antioxidans ist.

9. Verfahren nach einem der Ansprüche 5 und 6, wobei das Vernetzungsmittel und zumindest ein Zusatz gleichzeitig mit dem ungesättigten Polyolefin gemischt werden.

10. Verfahren nach einem der vorstehenden Ansprüche, wobei zumindest einige der Kohlenstoff-Kohlenstoff-Doppelbindungen Vinylgruppen sind.

11. Verfahren nach Anspruch 10, wobei das ungesättigte Polyolefin eine Gesamtmenge der Vinylgruppen/1000 Kohlenstoffatome von mehr als 0,11 aufweist.

12. Verfahren nach einem der vorstehenden Ansprüche, wobei das ungesättigte Polyolefin durch Copolymerisieren eines Olefinmonomers und zumindest eines mehrfach ungesättigten Comonomers erzeugt wird.

13. Verfahren nach Anspruch 12, wobei das ungesättigte Polyolefin eine Menge der Vinylgruppen/1000 Kohlenstoffatome, die vom mehrfach ungesättigten Comonomer stammen, von mindestens 0,03 aufweist.

14. Verfahren nach Anspruch 12 oder 13, wobei zumindest ein mehrfach ungesättigtes Comonomer ein Dien ist.

15. Verfahren nach Anspruch 14, wobei das Dien aus 1,7-Octadien, 1,9-Decadien, 1,11-Dodecandien, 1,13-Tetradecadien, 7-Methyl-1,6-octadien, 9-Methyl-1,8-decadien oder Gemischen davon ausgewählt ist.

16. Verfahren nach Anspruch 14, wobei das Dien aus Siloxanen mit der folgenden Formel ausgewählt ist:

$$CH_2=CH-[Si(CH_3)_2-O]_n-Si(CH_3)_2-CH=CH_2$$

wobei n = 1 oder mehr ist.

17. Verfahren nach einem der Ansprüche 12 bis 16, wobei das Olefinmonomer Ethylen ist.

18. Verfahren nach Anspruch 17, wobei das ungesättigte Polyethylen durch Hochdruck-Radikalpolymerisation erzeugt wird.

19. Verfahren nach einem der vorstehenden Ansprüche, wobei das Vernetzungsmittel ein Peroxid ist.

20. Verfahren nach Anspruch 19, wobei das Peroxid in einer Menge von 0,1 bis 3,0 Gew.-% zugesetzt wird, und zwar auf das Gewicht des vernetzbaren Gemischs bezogen.

21. Verfahren nach einem der vorstehenden Ansprüche, wobei das Substrat, auf das das vernetzbare Gemisch extrudiert wird, der metallische Leiter eines Stromkabels und/oder zumindest eine Überzugsschicht davon ist.

22. Verfahren nach Anspruch 21, wobei das Stromkabel unter Vernetzungsbedingungen behandelt wird, bis ein Dehnungswert im warmgehärteten Zustand der vernetzten Polymerzusammensetzung, bei einer Temperatur von 200°C gemessen, von weniger als 175 % erreicht ist, und zwar gemäß IEC 60811-2-1.

23. Verfahren nach Anspruch 22, wobei das Stromkabel unter Vernetzungsbedingungen behandelt wird, bis eine dauerhafte Verformung der vernetzten Polymerzusammensetzung, bei Raumtemperatur gemessen, von weniger als 15 % erreicht ist, und zwar gemäß IEC 60811-2-1.

**Revendications**

1. Procédé de préparation d'une composition de polymère réticulé, comprenant les étapes consistant à :

(a) préparer un mélange réticulable d'un agent de réticulation et d'une poly(oléfine) insaturée,
ayant une quantité totale de doubles liaisons carbone-carbone/1 000 atomes de carbone de plus de 0,37, d'après la norme ASTM D3124-72, où la ligne de base est tracée de 980 cm$^{-1}$ à environ 840 cm$^{-1}$ et les hauteurs de pic sont déterminées à environ 888 cm$^{-1}$ pour le vinylidène, environ 910 cm$^{-1}$ pour le vinyle et environ 965 cm$^{-1}$ pour le *trans*-vinylène,
où la quantité de doubles liaisons/1 000 atomes de carbone a été calculée à l'aide de formules suivantes (norme ASTM D3 124-72) :

$$\text{vinylidène/1 000 atomes C} = (14 \times A)/(18,24 \times L \times D)$$

$$\text{vinyle/1 000 atomes C} = (14 \times A)/(13,13 \times L \times D)$$

$$\textit{trans}\text{-vinylène/1 000 atomes C} = (14 \times A)/(15,14 \times L \times D)$$

où

A : absorbance (hauteur de pic)
L : épaisseur de film en mm
D : densité du matériau ;

où l'étape de mélange est réalisée avant et/ou pendant l'extrusion de la poly(oléfine) insaturée, et l'agent de réticulation est dans un état liquide lorsqu'il vient en contact avec la poly(oléfine) insaturée,
(b) extruder le mélange dans une extrudeuse,
(c) appliquer le mélange extrudé sur un substrat, et
(d) traiter le mélange extrudé dans des conditions de réticulation.

**2.** Procédé selon la revendication 1, dans lequel pour le mélange, l'agent de réticulation liquide vient en contact avec la poly(oléfine) insaturée dans une cuve de mélange, suivi par une alimentation de mélange dans l'extrudeuse.

**3.** Procédé selon la revendication 1 ou la revendication 2, dans lequel la poly(oléfine) insaturée est préchauffée avant l'étape de mélange.

**4.** Procédé selon la revendication 1, dans lequel le mélange est préparé en fournissant la poly(oléfine) insaturée dans l'extrudeuse et en alimentant directement l'extrudeuse avec l'agent de réticulation.

**5.** Procédé selon l'une quelconque des revendications précédentes, dans lequel un ou plusieurs additifs sont mélangés avec la poly(oléfine) insaturée, le(s) additif(s) étant dans un état liquide lorsqu'ils sont amenés en contact avec la poly(oléfine) insaturée.

**6.** Procédé selon la revendication 5, dans lequel les additifs sont choisis parmi les antioxydants, les retardateurs de vulcanisation prématurée, les intensificateurs de réticulation, les stabilisants, les aides au traitement, les désactiveurs d'acide, ou leurs mélanges.

**7.** Procédé selon l'une des revendications 5 et 6, dans lequel la poly(oléfine) insaturée est mélangée avec au moins un additif avant que le mélange avec l'agent de réticulation ne soit effectué.

8. Procédé selon la revendication 7, dans lequel le au moins un additif est un antioxydant.

9. Procédé selon l'une des revendications 5 et 6, dans lequel l'agent de réticulation et au moins un additif sont mélangés simultanément avec la poly(oléfine) insaturée.

10. Procédé selon l'une des revendications précédentes, dans lequel au moins certaines des doubles liaisons carbone-carbone sont des groupes vinyle.

11. Procédé selon la revendication 10, dans lequel la poly(oléfine) insaturée a une quantité totale de groupes vinyle/1 000 atomes de carbone de plus de 0,11.

12. Procédé selon l'une des revendications précédentes, dans lequel la poly(oléfine) insaturée est préparée en copolymérisant un monomère d'oléfine et au moins un comonomère polyinsaturé.

13. Procédé selon la revendication 12, dans lequel la poly(oléfine) insaturée a une quantité de groupes vinyle/1 000 atomes de carbone ayant pour origine le comonomère polyinsaturé d'au moins 0,03.

14. Procédé selon la revendication 12 ou 13, dans lequel au moins un comonomère polyinsaturé est un diène.

15. Procédé selon la revendication 14, dans lequel le diène est choisi parmi le 1,7-octadiène, le 1,9-décadiène, le 1,11-dodécadiène, le 1,13-tétradécadiène, le 7-méthyl-1,6-octadiène, le 9-méthyl-1,8-décadiène, ou leurs mélanges.

16. Procédé selon la revendication 14, dans lequel le diène est choisi parmi les siloxanes répondant à la formule suivante :

$$CH_2=CH-[Si(CH_3)_2-O]_n-Si(CH_3)_2-CH=CH_2, \text{ dans laquelle } n = 1 \text{ ou plus.}$$

17. Procédé selon l'une des revendications 12 à 16, dans lequel le monomère d'oléfine est l'éthylène.

18. Procédé selon la revendication 17, dans lequel le poly(éthylène) insaturé est produit par polymérisation radicalaire haute pression.

19. Procédé selon l'une des revendications précédentes, dans lequel l'agent de réticulation est un peroxyde.

20. Procédé selon la revendication 19, dans lequel le peroxyde est ajouté en une quantité de 0,1 à 3,0 % en poids, par rapport au poids du mélange réticulable.

21. Procédé selon l'une des revendications précédentes, dans lequel le substrat sur lequel le mélange réticulable est extrudé est le conducteur métallique d'un câble d'alimentation et/ou au moins une couche de revêtement de celui-ci.

22. Procédé selon la revendication 21, dans lequel le câble d'alimentation est traité dans des conditions de réticulation jusqu'à ce qu'une valeur d'allongement résiduel à chaud de la composition de polymère réticulé, mesurée à une température de 200 °C, de moins de 175 % soit obtenue, selon IEC 60811-2-1.

23. Procédé selon la revendication 22, dans lequel le câble d'alimentation est traité dans des conditions de réticulation jusqu'à ce qu'une déformation permanente de la composition de polymère réticulé, mesurée à température ambiante, de moins de 15 % soit obtenue, selon IEC 60811-2-1.

**REFERENCES CITED IN THE DESCRIPTION**

**Patent documents cited in the description**

- WO 9308222 A